# EUROPÄISCHE PATENTANMELDUNG

(11) **EP 1 256 383 A2**
(43) Veröffentlichungstag der Anmeldung: **13.11.2002**
(21) Anmeldenummer: 02009274.8
(22) Anmeldetag: 29.04.2002
(51) Int. Cl.: B01J 39/20, C08F 257/02, C08F 8/36

(54) **Verfahren zur Herstellung von monodispersen gelförmigen Kationenaustauschern**

(30) Priorität: 11.05.2001 DE 10122896
(71) Anmelder: BAYER AG, 51368 Leverkusen (DE)
(72) Erfinder: Schmid, Claudia, Dr., 42799 Leichlingen (DE); Podszun, Wolfgang, Dr., 51061 Köln (DE); Seidel, Rüdiger, Dr., 51375 Leverkusen (DE); Klipper, Reinhold, Dr., 50933 Köln (DE); Born, Ralf-Jürgen, Dr., 40764 Langenfeld (DE); Halle, Olaf, Dr., 51061 Köln (DE); Schnegg, Ulrich, Dr., 51377 Leverkusen (DE)

(57) **Zusammenfassung**

Die Erfindung betrifft ein Verfahren zur Herstellung gelförmiger Kationenaustauscher mit hoher osmotischer und mechanischer Stabilität und verbesserter Oxidationsstabilität nach einem Saat-Zulauf-Verfahren erhalten, wobei als Saat ein Polymerisat mit 3,5 - 7 Gew.-% Vernetzer eingesetzt wird.

## Beschreibung

Die Erfindung betrifft ein Verfahren zur Herstellung von gelförmigen Kationenaustauschern mit hoher Oxidationsstabilität, die Kationenaustauscher selber sowie deren Verwendungen.

Gelförmige Kationenaustauscher können durch Sulfonierung von vernetzten Styrolpolymerisaten erhalten werden. In jüngster Zeit kommen in zunehmenden Masse vernetzte Styrolpolymerisate, die durch seed/feed-Technik gewonnen wurden, zum Einsatz.

So beschreibt die EP-00 98 130 B1 die Herstellung von gelförmigen Styrolpolymerisaten durch ein seed/feed-Verfahren, bei dem der Feed unter polymerisierenden Bedingungen zu einer Saat zugesetzt wird, die zuvor mit 0,1 - 3 Gew.-% Divinylbenzol vernetzt wurde. Die EP-0 101 943 B1 beschreibt ein seed/feed-Verfahren, bei dem mehrere Zuläufe mit unterschiedlicher Zusammensetzung nacheinander unter polymerisierenden Bedingungen zur Saat zugesetzt werden. Die US 5 068 255 beschreibt ein seed/feed-Verfahren, bei dem ein erstes Monomergemisch bis zu einem Umsatz von 10 bis 80 Gew.-% polymerisiert und anschließend mit einem zweiten Monomergemisch ohne Radikalinitiator als Feed unter polymerisierenden Bedingungen versetzt wird. Nachteilig bei den Verfahren nach EP-00 98 130 B1, EP-0 101 943 B1 und US 5 068 255 ist die komplizierte Dosierung, bei der die Zulaufgeschwindigkeit auf die Polymerisationskinetik abgestimmt werden muss.

Aus der EP-A 0 826 704 und der DE-A 19 852 667 sind seed/feed-Verfahren unter Verwendung von microverkapselten Polymerisatpartikeln als Seed bekannt. Die nach diesen Verfahren erhaltenen Perlpolymerisate zeichnen sich durch einen im Vergleich zu herkömmlichen, direkt synthetisierten Perlpolymerisaten erhöhten Anteil an unvernetztem löslichem Polymerisat aus. Dieser Anteil an nicht vernetztem, löslichem Polymerisat ist bei der Umsetzung zu Ionenaustauschern unerwünscht, da die herausgelösten Polymeranteile in den zur Funktionalisierung eingesetzten Reaktionslösungen angereichert werden. Zudem können erhöhte Mengen an löslichem Polymerisat zu einem unerwünschten Ausbluten (leaching) der Ionenaustauscher führen.

Leaching kann auch durch unzureichende Oxidationsstabilität der Kationenaustauscher auftreten. Oxidationsstabilität im Sinne der vorliegenden Erfindung bedeutet, dass Kationenaustauscher unter oxidierenden Bedingungen - wie sie üblicherweise beim Gebrauch von Ionenaustauschern auftreten - in Kombination mit einem Anionenaustauscher keine Bestandteile an das zu reinigende Medium, bevorzugt Wasser, abgeben. Die Abgabe von Oxidationsprodukten, in der Regel Polystyrolsulfonsäuren, führt ansonsten zu einem Leitfähigkeitsanstieg im Eluat. Das Leaching von Kationenaustauschern ist dann besonders problematisch, wenn die abgegebenen Polystyrolsulfonsäuren ein erhöhtes Molekulargewicht im Bereich von ca. 10 000 bis 100 000 g/mol aufweisen.

Ein weiteres Problem der Kationenaustauscher hergestellt nach dem oben genannten Stand der Technik besteht in ihrer nicht immer ausreichenden mechanischen und osmotischen Stabilität. So können Kationenaustauscherperlen bei der Verdünnung nach der Sulfonierung durch die auftretenden osmotischen Kräfte zerbrechen. Für alle Anwendungen von Kationenaustauschern gilt, dass die in Perlform vorliegenden Austauscher ihren Habitus behalten müssen und nicht während der Anwendung teilweise oder auch gänzlich abgebaut werden oder in Bruchstücke zerfallen dürfen. Bruchstücke und Perlpolymerisatsplitter können während der Reinigung in die zu reinigenden Lösungen gelangen und diese selbst verunreinigen. Ferner ist das Vorhandensein von geschädigten Perlpolymerisaten für die Funktionsweise der in Säulenverfahren eingesetzten Kationenaustauscher selbst ungünstig. Splitter führen zu einem erhöhten Druckverlust des Säulensystems und vermindern damit den Durchsatz der zu reinigenden Flüssigkeit durch die Säule.

Die Aufgabe der vorliegenden Erfindung ist die Bereitstellung von gelförmigen Kationenaustauschern mit hoher mechanischer und osmotischer Stabilität und gleichzeitig verbesserter Oxidationssstabilität.

Gegenstand der vorliegenden Erfindung ist deshalb ein Verfahren zur Herstellung von gelförmigen Kationenaustauschern mit verbesserter Oxidationsstabilität nach einem Saat-Zulauf-Verfahren (seed/feed-Verfahren) dadurch gekennzeichnet, dass man
a) ein perlförmiges vernetztes Styrolpolymerisat enthaltend 3,5 - 7 Gew.-% Vernetzer als Saatpolymerisat in einer wässrigen Suspension bereitstellt,
b) das Saatpolymerisat in einem Monomergemisch aus Vinylmonomer, Vernetzer und Radikalstarter quellen lässt,
c) das Monomergemisch im Saatpolymerisat polymerisiert, und
d) das entstandene Copolymerisat durch Sulfonierung fünktionalisiert.

Das Saatpolymerisat aus Verfahrensschritt a) enthält 3,5 - 7 Gew.-%, vorzugsweise 4,5 - 6 Gew.-% Vernetzer. Als Vernetzer sind Verbindungen geeignet, die zwei oder mehr, vorzugsweise zwei bis vier radikalisch polymerisierbare Doppelbindungen pro Molekül enthalten. Beispielhaft seien genannt: Divinylbenzol, Divinyltoluol, Trivinylbenzol, Divinylnaphthalin, Trivinylnaphthalin, Diethylenglycoldivinylether, Octadien-1,7, Hexadien-1,5, Ethylenglycoldimethacrylat, Triethylenglycoldimethacrylat, Trimethylolpropantrimethacrylat, Allylmethacrylat oder Methylen-N,N'bisacrylamid. Divinylbenzol wird als Vernetzer bevorzugt. Für die meisten Anwendungen sind kommerzielle Divinylbenzolqualitäten, die neben den Isomeren des Divinylbenzols auch Ethylvinylbenzol enthalten, ausreichend. Der Hauptbestandteil der Saat ist Styrol. Neben Styrol und Vernetzer können weitere Monomere beispielsweise in Mengen von 1 - 15 Gew.-% in der Saat anwesend sein. Beispielhaft seien genannt Acrylnitril, Vinylpyridin, Methylacrylat, Ethylacrylat, Hydroxyethylmethacrylat oder Acrylsäure.

Die Teilchengröße des Saatpolymerisates beträgt 5 bis 750 µm, vorzugsweise 20 bis 500 µm, besonders bevorzugt 100 bis 400 µm. Die Form der Teilchengrößenverteilungskurve muss der des gewünschten Kationenaustauschers entsprechen. Zur Herstellung eines engverteilten bzw. monodispersen Ionenaustauschers im Sinne der vorliegenden Erfindung wird demnach ein engverteiltes bzw. monodisperses Saatpolymerisat verwendet. In einer bevorzugten Ausführungsform der vorliegenden Erfindung wird ein monodisperses Saatpolymerisat eingesetzt. Mit monodispers ist in diesem Zusammenhang gemeint, dass das Verhältnis aus dem 90 %-Wert (Ø (90)) und dem 10 %-Wert (Ø (10)) der Volumenverteilungsfunktion der Teilchengrössen weniger als 2, bevorzugt weniger als 1,5, besonders bevorzugt weniger als 1,25 beträgt. Der 90 %-Wert (⌀ (90)) gibt den Durchmesser an, der von 90 % der Teilchen unterschritten wird. In entsprechender Weise unterschreiten 10 % der Teilchen den Durchmesser des 10 %-Wertes (⌀ (10)). Zur Bestimmung der mittleren Teilchengröße und der Teilchengrößenverteilung sind übliche Methoden, wie Siebanalyse oder Bildanalyse geeignet.

In einer weiteren bevorzugten Ausführungsform der vorliegenden Erfindung ist das Saatpolymerisat mikroverkapselt. Als Saat geeignete mikroverkapselte Polymerisate können gemäß EP-00 46 535 B1 erhalten werden, deren Inhalt von der vorliegenden Anmeldung hinsichtlich der Mikroverkapselung mit umfasst wird.

Für die Mikroverkapselung kommen die für diesen Einsatzzweck bekannten Materialien in Frage, insbesondere Polyester, natürliche und synthetische Polyamide, Polyurethane, Polyharnstoffe. Als natürliches Polyamid ist Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid oder Methacrylamid. Gelatinehaltige Kapseln können mit üblichen Härtungsmitteln wie z.B. Formaldehyd oder Glutardialdehyd gehärtet werden. Die Verkapselung von Monomertröpfchen beispielsweise mit Gelatine, gelatinehaltigen Koazervaten oder gelatinehaltigen Komplexkoazervaten, wird in EP-00 46 535 B1 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (z.B. ein Isocyanat oder ein Säurechlorid) mit einer zweiten in der wässrigen Phase gelösten Reaktivkomponente (z.B. einem Amin) zur Reaktion gebracht wird. Gemäß der vorliegenden Erfindung ist die Mikroverkapselung mit gelatinehaltigem Komplexkoazervat bevorzugt.

Das Saatpolymerisat wird bevorzugt in einer wässrigen Phase suspendiert, wobei das Verhältnis von Polymerisat und Wasser zwischen 2 : 1 und 1 : 20 liegen kann. Bevorzugt wird ein Verhältnis von 1 : 1,5 bis 1: 5 vorgelegt. Die Anwendung eines Hilfsmittels, beispielsweise eines Tensides oder eines Schutzkolloides ist nicht notwendig. Das Suspendieren kann beispielsweise mit Hilfe eines normalen Rührers erfolgen, wobei bevorzugt niedrige bis mittlere Scherkräfte angewendet werden.

Im Verfahrensschritt b) wird zu dem suspendierten Saatpolymerisat eine Mischung ("feed") aus Vinylmonomer, Vernetzer und Radikalstarter hinzugegeben.

Als Vinylmonomere kommen die Monomere Styrol, Vinyltoluol, Ethylstyrol, alpha-Methylstyrol, Chlorstyrol, Acrylsäure, Methacrylsäure, Acrylsäureester, Methacrylsäureester, Acrylnitril, Methacrylnitil, Acrylamid, Methacrylamid, sowie Gemische aus diesen Monomeren in Frage. Bevorzugt werden Mischungen aus Styrol und Acrylnitril. Besonders bevorzugt wird ein Gemisch aus 86 - 98 Gew.-% Styrol und 2 - 14 Gew.-% Acrylnitril eingesetzt. Ganz besonders bevorzugt wird ein Gemisch aus 88 - 95 Gew.-% Styrol und 5 - 12 Gew.-% Acrylnitril.

Als Vernetzer seien Divinylbenzol, Divinyltoluol, Trivinylbenzol, Divinylnaphtalin, Trivinylnaphtalin, Diethylenglycoldivinylether, Octadien-1,7, Hexadien-1,5, Ethylenglycoldimethacrylat, Triethylenglycoldimethacrylat, Trimethylolpropantrimethacrylat, Allylmethacrylat oder Methylen-N,N'-bisacrylamid genannt. Divinylbenzol wird bevorzugt. Für die meisten Anwendungen sind kommerzielle Divinylbenzolqualitäten, die neben den Isomeren des Divinylbenzols auch Ethylvinylbenzol enthalten, ausreichend. Der Gehalt an Vernetzer im Monomergemisch beträgt 5 - 20 Gew.-%, vorzugsweise 7 bis 15 Gew.-%.

Für das erfindungsgemäße Verfahren geeignete Radikalstarter sind im "feed" beispielsweise Peroxyverbindungen wie Dibenzoylperoxid, Dilaurylperoxid, Bis(pchlorbenzoylperoxid), Dicyclohexylperoxydicarbonat, tert.-Butyl-2-ethyl-peroxyhexanoat, 2,5-Bis(2-ethylhexanoylperoxy)-2,5-dimethylhexan oder tert.-Amylperoxy-2-etylhexan, tert.-Butyl-peroxybenzoat, desweiteren Azoverbindungen wie 2,2'-Azobis(isobutyronitril) und 2,2'-Azobis(2-methylisobutyronitril). Bevorzugt werden Mischungen von Radikalstartern, insbesondere Mischungen von Radikalstartern mit unterschiedlicher Zerfallskinetik, beispielsweise Mischungen aus tert.-Butyl-2-ethyl-peroxyhexanoat und tert.-Butyl-peroxybenzoat eingesetzt. Die Radikalstarter werden im allgemeinen in Mengen von 0.05 bis 2.5 Gew.-%, vorzugsweise 0.2 bis 1.5 Gew.-% bezogen auf die Mischungen aus Monomer und Vernetzer angewendet.

Das Verhältnis von Saatpolymerisat zu zugesetzter Mischung (seed/feed-Verhältnis) beträgt im allgemeinen 1: 0,25 bis 1: 5, vorzugsweise 1: 0,5 bis 1: 2,5, besonders bevorzugt 1 : 0,6 bis 1 : 1,6. Angesichts des hohen Vernetzergehaltes der Saat ist es überraschend, dass das zugesetzte Monomergemisch unter den erfindungsgemäßen Bedingungen vollständig in das Saatpolymerisat einquillt. Bei gegebener Teilchengröße des Saatpolymerisates lässt sich durch das seed/feed-Verhältnis die Teilchengröße des entstehenden Copolymerisates bzw. des Ionenaustauschers einstellen.

Das Einquellen des Monomergemisches in das Saatpolymerisat erfolgt bei einer Temperatur, bei der keiner der zugesetzten Radikalstarter aktiv ist. Im Allgemeinen erfolgt die Quellung bei 0 - 60°C und dauert ca. 0.5 bis 5 h.

Die Polymerisation des gequollenen Saatpolymerisats zum Copolymerisat gemäß Verfahrensschritt c) erfolgt in Anwesenheit eines oder mehrerer Schutzkolloide und gegebenenfalls eines Puffersystems. Als Schutzkolloide im Sinne der vorliegenden Erfindung sind natürliche und synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern geeignet. Sehr gut geeignet sind auch Cellulosederivate, insbesondere Celluloseester oder Celluloseether, wie Carboxymethylcellulose oder Hydroxyethylcellulose. Cellulosederivate sind als Schutzkolloide im Sinne der vorliegenden Erfindung bevorzugt. Die Einsatzmenge der Schutzkolloide beträgt im allgemeinen 0.05 bis 1 Gew.-% bezogen auf die Wasserphase, vorzugsweise 0.1 bis 0.5 Gew.-%. Die Zugabe des Schutzkolloids kann in Form einer wässrigen Lösung erfolgen und geschieht in der Regel erst nach dem Einquellen des Monomergemisches in die Saat.

Die Polymerisation gemäß Verfahrensschritt c) kann in Anwesenheit eines Puffersystems durchgeführt werden. Bevorzugt werden Puffersysteme, die den pH-Wert der Wasserphase zu Beginn der Polymerisation auf einen Wert zwischen 14 und 6, vorzugsweise zwischen 13 und 9 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme im Sinne der vorliegenden Erfindung enthalten Phosphatoder Boratsalze.

In einer besonderen Ausführungsform der vorliegenden Erfindung enthält die wässrigen Phase einen gelösten Inhibitor. Als Inhibitoren kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit. Beispiele für organische Inhibitoren sind phenolische Verbindungen wie Hydrochinon, Hydrochinonmonomethylether, Resorcin, Brenzkatechin, tert.-Butylbrenzkatechin oder Kondensationsprodukte aus Phenolen mit Aldehyden. Weitere organische Inhibitoren sind stickstoffhaltige Verbindungen wie beispielsweise Diethylhydroxylamin und Isopropylhydroxylamin. Resorcin ist im Sinne der vorliegenden Erfindung als Inhibitor bevorzugt. Die Konzentration des Inhibitors beträgt 5 - 1000 ppm, vorzugsweise 10 - 500 ppm, besonders bevorzugt 20 - 250 ppm, bezogen auf die wässrige Phase.

Das Verhältnis von organischer Phase zur Wasserphase beträgt bei der Polymerisation der gequollenen Saat 1: 0,8 bis 1 : 10, vorzugsweise 1 : 1 bis 1: 5.

Die Temperatur bei der Polymerisation des gequollenen Saatpolymerisates richtet sich nach der Zerfallstemperatur des eingesetzten Initiators/der eingesetzten Initiatoren. Sie liegt im allgemeinen zwischen 50 bis 150°C, vorzugsweise zwischen 55 und 140°C. Die Polymerisaton dauert 2 bis 20 Stunden. Es hat sich bewährt, ein Temperaturprogramm anzuwenden, bei dem die Polymerisation bei niedriger Temperatur, beispielsweise 60°C begonnen wird und mit fortschreitendem Polymerisationsumsatz die Reaktionstemperatur z.B. auf 130°C gesteigert wird. Es wurde gefunden, dass die Polymerisation in einem breitem Temperaturbereich, besonders bei Verwendung von mindestens zwei Radikalstartern mit unterschiedlicher Zerfallskinetik zu Kationenaustauschern mit hervorragender mechanischer und osmotischer Stabilität führt.

Nach der Polymerisation kann das Copolymerisat mit üblichen Methoden beispielsweise durch Filtrieren oder Dekantieren isoliert und gegebenenfalls nach ein oder mehreren Wäschen getrocknet und falls gewünscht gesiebt werden.

Die Umsetzung der Copolymerisate zum Kationenaustauscher gemäß Verfahrensschritt d) erfolgt durch Sulfonierung. Geeignete Sulfonierungsmittel im Sinne der vorliegenden Erfindung sind Schwefelsäure, Schwefeltrioxid und Chlorsulfonsäure.

Bevorzugt wird Schwefelsäure mit einer Konzentration von 90 -100 Gew.-%, besonders bevorzugt von 96 - 99 Gew.-%. Die Temperatur bei der Sulfonierung liegt im allgemeinen bei 60 - 180°C, bevorzugt bei 90 - 130°C, besonders bevorzugt bei 95°C - 110°C. Es wurde gefunden, dass die erfindungsgemäßen Copolymerisate ohne Zusatz von Quellungsmitteln (wie z.B. Chlorbenzol oder Dichlorethan) sulfoniert werden können und dabei homogene Sulfonierungsprodukte liefern.

Bei der Sulfonierung wird das Reaktionsgemisch gerührt. Dabei können verschiedene Rührertypen, wie Blatt-, Anker-, Gitter- oder Turbinenrührer eingesetzt werden. Es hat sich gezeigt, dass ein radialfördernder Doppelturbinenrührer besonders gut geeignet ist.

In einer besonders bevorzugten Ausführungsform der vorliegenden Erfindung erfolgt die Sulfonierung nach dem sogenannten "Semibatchverfahren". Bei dieser Methode wird das Copolymerisat in die temperierte Schwefelsäure eindosiert. Dabei ist es besonders vorteilhaft, die Dosierung portionsweise durchzuführen.

Nach der Sulfonierung wird das Reaktionsgemisch aus Sulfonierungsprodukt und Restsäure auf Raumtemperatur abgekühlt und zunächst mit Schwefelsäuren abnehmender Konzentrationen und dann mit Wasser verdünnt.

Das gesamte Verfahren kann kontinuierlich, batchweise oder semibatchweise durchgeführt werden. In einer bevorzugten Weise wird das Verfahren in einer prozessgesteuerten Anlage durchgeführt.

Gegenstand der vorliegenden Erfindung sind außerdem die gelförmigen Kationenaustauscher mit verbesserter Oxidationsstabilität erhältlich nach einem Saat-Zulauf-Verfahren durch
a) Bereitstellung einer wässrigen Suspension eines perlförmigen 3,5 - 7 Gew.-% Vernetzer enthaltenden vernetzten Styrolpolymerisates als Saatpolymerisat,
b) Quellen des Saatpolymerisates in einem Monomergemisch aus Vinylmonomer, Vernetzer und Radikalstarter,
c) Polymerisieren des Monomergemisches im Saatpolymerisat und
d) Funktionalisieren des gebildeten Copolymerisates durch Sulfonierung.

Für viele Anwendungen ist es günstig, die erfindungsgemäß erhältlichen Kationenaustauscher von der sauren Form in die Natrium-Form zu überführen. Diese Umladung erfolgt mit Natronlauge einer Konzentration von 1 - 60 Gew.-%, vorzugsweise 3 -10 Gew.-%.

Die nach dem erfindungsgemäßen Verfahren erhaltenen Kationenaustauscher zeichnen sich durch eine besonders hohe Stabilität und Reinheit aus. Sie zeigen auch nach längerem Gebrauch und vielfacher Regeneration keine Defekte an den lonenaustauscherkugeln und kein Ausbluten (Leaching) des Austauschers.

Es wurde gefunden, dass die erfindungsgemässen Kationenaustauscher auch bei niedrigen Gehalten an Divinylbenzol als Vernetzer, beispielsweise 6,5 bis 7, 6 Gew.-% DVB im Copolymerisat eine vorteilhaft hohe Totalkapazität von 2,1 bis 2,4 Äquivalent/1 aufweisen.

Für Kationenaustauscher gibt es eine Vielzahl unterschiedlicher Anwendungen. So werden sie beispielsweise bei der Trinkwasseraufbereitung, bei der Herstellung von Reinstwasser (notwendig bei der Mikrochip-Herstellung für die Computerindustrie), zur chromatographischen Trennung von Glucose und Fructose und als Katalysatoren für verschiedene chemische Reaktionen (wie z.B. bei der Bisphenol-A-Herstellung aus Phenol und Aceton) eingesetzt. Für die meisten dieser Anwendungen ist erwünscht, dass die Kationenaustauscher die ihnen zugedachten Aufgaben erfüllen, ohne Verunreinigungen, die von ihrer Herstellung herrühren können oder während des Gebrauches durch Polymerabbau entstehen, an ihre Umgebung abgeben. Das Vorhandensein von Verunreinigungen im vom Kationenaustauscher abfließenden Wasser macht sich dadurch bemerkbar, dass die Leitfähigkeit und/oder der Gehalt an organischem Kohlenstoff (TOC Gehalt) des Wassers erhöht sind.

Die erfindungsgemäßen Kationenaustauscher sind auch für die Vollentsalzung von Wasser hervorragend geeignet. Auch nach längeren Standzeiten der Entsalzungsanlagen wird keine erhöhte Leitfähigkeit beobachtet. Auch wenn die Struktur-Eigenschaftskorrelation der erfindungsgemäßen Kationenaustauscher nicht in allen Einzelheiten bekannt ist, ist es wahrscheinlich, dass die günstigen Leachingeigenschaften auf die besondere Netzwerkstruktur zurückzuführen sind.

Gegenstand der vorliegenden Erfindung sind deshalb die Verwendung der erfindungsgemäßen Kationenaustauscher
- zur Entfernung von Kationen, Farbpartikeln oder organischen Komponenten aus wässrigen oder organischen Lösungen und Kondensaten, wie z.B. Prozess- oder Turbinenkondensaten,
- zur Enthärtung im Neutralaustausch von wässrigen oder organischen Lösungen und Kondensaten, wie z.B. Prozess- oder Turbinenkondensaten,
- zur Reinigung und Aufarbeitung von Wässern der chemischen Industrie, der Elektronik-Industrie und aus Kraftwerken,
- zur Vollentsalzung wässriger Lösungen und/oder Kondensate, dadurch gekennzeichnet, dass man diese in Kombination mit gelförmigen und/oder makroporösen Anionenaustauschern einsetzt,
- zur Entfärbung und Entsalzung von Molken, Gelatinedünnbrühen, Fruchtsäften, Fruchtmosten und wässrigen Lösungen von Zuckern,
- zu feingemahlener Pulverform allein oder gegebenenfalls in Mischung mit starkbasischen Anionenaustauschern zur Filtration oder Entsalzung von Wässern, beispielsweise Kondensaten oder in der Hydrometallurgie.

Die vorliegende Erfindung betrifft deshalb auch
- Verfahren zur Vollentsalzung wässriger Lösungen und/oder Kondensate, wie z.B. Prozess- oder Turbinenkondensate, dadurch gekennzeichnet, das man erfindungsgemäß monodisperse Kationenaustauscher in Kombination mit heterodispersen oder monodispersen, gelförmigen und/oder makroporösen Anionenaustauschern einsetzt,
- Kombinationen von erfindungsgemäß hergestellten monodispersen Kationenaustauschern mit heterodispersen oder monodispersen, gelförmigen und/oder makroporösen Anionenaustauschern zur Vollentsalzung wässriger Lösungen und/oder Kondensate, wie z.B. Prozess- oder Turbinenkondensate,
- Verfahren zur Reinigung und Aufarbeitung von Wässern der chemischen, der Elektronik-Industrie und aus Kraftwerken, dadurch gekennzeichnet, dass man erfindungsgemäß monodisperse Kationenaustauscher einsetzt,
- Verfahren zur Entfernung von Kationen, Farbpartikeln oder organischen Komponenten aus wässrigen oder organischen Lösungen und Kondensaten, wie z.B. Prozess- oder Turbinenkondensaten, dadurch gekennzeichnet, dass man erfindungsgemäß monodisperse Kationenaustauscher einsetzt,
- Verfahren zur Enthärtung im Neutralaustausch von wässrigen oder organischen Lösungen und Kondensaten, wie z.B. Prozess- oder Turbinenkondensaten, dadurch gekennzeichnet, dass man erfindungsgemäß monodisperse Kationenaustauscher einsetzt,
- Verfahren zur Entfärbung und Entsalzung von Molken, Gelatinedünnbrühen. Fruchtsäften, Fruchmosten und wässrigen Lösungen von Zuckern in der Zucker-, Stärke- oder Pharmaindustrie oder Molkereien, dadurch gekennzeichnet, dass man erfindungsgemäß hergestellte monodisperse Kationenaustauscher einsetzt.

### Beispiele

### Untersuchungsmethoden:

### Bestimmung der Leitfähigkeit im Eluat von Kationenaustauschern

1 l entionisiertes Wasser werden in Kreislauffahrweise zunächst über 1 l des zu untersuchenden Kationenaustauschers in der H-Form und anschließend über 5 ml Anionenaustauscher vom Typ Mono Plus H 500® (Bayer AG, Leverkusen) mit einer Umpumpgeschwindigkeit von 7 l/h bei 25°C gefahren. Die Leitfähigkeit des umgepumpten Wassers wird nach 70 h in µS/cm bestimmt.

### Bestimmung des Molekulargewichtes der Polystyrolsulfonsäuren im Eluat von Kationenaustauschern

Das Molekulargewicht der Polystyrolsulfonsäuren im Wasser, das während 70 h in Kreislauffahrweise durch Kationen - und Anionenaustauscher gepumpt wurde, wird mittels Gelpermeationschromatographie unter Verwendung von Polystyrolsulfonsäuren bekannten Molekulargewichtes als Eichsubstanz bestimmt.

### Beispiel 1 (Vergleichsbeispiel)

### a) Herstellung eines Copolymerisates

Entsprechend Beispiel 2a-b) der EP-A 1 000 659 wurde ein Copolymerisat hergestellt.

### b) Herstellung eines Kationenaustauschers

In einem 2 l Vierhalskolben werden 1400 ml 98,4 gew.-%ige Schwefelsäure vorgelegt und auf 100°C erhitzt . In 4 Stunden werden in 10 Portionen - insgesamt 350 g trockenes Copolymerisat aus 1a) unter Rühren eingetragen. Anschließend wird weitere 6 Stunden bei 120°C gerührt. Nach dem Abkühlen wird die Suspension in eine Glassäule überführt. Schwefelsäuren abnehmender Konzentrationen, beginnend mit 90 Gew.-%, zuletzt reines Wasser werden von oben über die Säule filtriert. Man erhält 1 630 ml Kationenaustauscher in der H-Form.

### c) Umladung eines Kationenaustauschers

Zur Umladung des Kationenaustauschers aus der H- in die Natriumform werden 1610 ml sulfoniertes Produkt aus 1b) und 540 ml entionisiertes Wasser bei Raumtemperatur in einem 6 l-Glasreaktor vorgelegt. Die Suspension wird in 120 Minuten mit 2489 ml 5 gew.-%iger wässriger Natronlauge versetzt. Anschließend wird weitere 15 Minuten gerührt. Danach wird das Produkt mit entionisiertem Wasser gewaschen. Man erhält 1490 ml Kationenaustauscher in der Na-Form.

| | |
|---|---|
| Totalkapazität (Na-Form) in mol/l | 2,01 |
| Leitfähigkeit im Eluat nach 70 h in µS/cm | 3,296 |
| Molekulargewicht der Polystyrolsulfonsäuren im Eluat in g/mol | 23000 |

### Beispiel 2 (erfindungsgemäß)

### a) Herstellung eines Copolymerisates

In einem 4 l Glasreaktor wird eine wässrige Lösung aus 3,6 g Borsäure und 1,0 g Natriumhydroxid in 1100 g entionisiertem Wasser vorgelegt. Hierzu werden 600,2 g monodisperses mikroverkapseltes Saatpolymerisat enthaltend 95 Gew.-% Styrol und 5,0 Gew.-% Divinylbenzol gegeben. Das Saatpolymerisat wurde nach EP-00 46535 B1 hergestellt. Die Kapselwand des Saatpolymerisats besteht aus einem mit Formaldehyd gehärteten Komplexkoazervat aus Gelatine und einem Acrylamid/Acrylsäure-Copolymerisat. Die mittlere Teilchengrösse des Saatpolymerisats beträgt 365 µm und der Ø(90)/Ø(10)-Wert 1,05. Das Gemisch wird mit einer Rührgeschwindigkeit von 220 Upm gerührt. Innerhalb von 30 min wird ein Gemisch aus 476,2 g Styrol, 48,0 g Acrylnitril, 76,0 g Divinylbenzol (80,6 gew.-%ig), 2,2 g tert-Butylperoxy-2-ethylhexanoat und 1,5 g tert-Butylperoxybenzoat als Feed zugesetzt. Das Gemisch wird 2 Stunden bei 50°C gerührt, wobei der Gasraum mit Stickstoff gespült wird. Danach wird eine Lösung von 2,4 g Methylhydroxyethylcellulose in 120 g entionisiertem Wasser zugesetzt und 1 Stunde bei 50°C gerührt. Der Ansatz wird auf 63°C aufgeheizt und 10 Stunden bei dieser Temperatur belassen, anschließend wird 3 Stunden bei 130°C gerührt. Der Ansatz wird nach dem Abkühlen über ein 40 µm-Sieb mit entionisiertem Wasser gewaschen und dann 18 Stunden bei 80°C im Trockenschrank getrocknet. Man erhält 1164 g eines kugelförmigen Copolymerisats mit einer Teilchengröße von 460 µm und einem Ø(90)/Ø(10)-Wert von 1,07.

### b) Herstellung eines Kationenaustauschers

In einem 2 1 Vierhalskolben werden 1400 ml 98,2 gew.-%ige Schwefelsäure vorgelegt und auf 100°C erhitzt. In 4 Stunden werden in 10 Portionen - insgesamt 350 g trockenes Copolymerisat aus 2a) unter Rühren eingetragen. Anschließend wird weitere 6 Stunden bei 120°C gerührt. Nach dem Abkühlen wird die Suspension in eine Glassäule überführt. Schwefelsäuren abnehmender Konzentrationen, beginnend mit 90 Gew.-%, zuletzt reines Wasser werden von oben über die Säule filtriert. Man erhält 1460 ml Kationenaustauscher in der H-Form.

### c) Umladung eines Kationenaustauschers

Zur Umladung des Kationenaustauschers aus der H- in die Natriumform werden 1440 ml sulfoniertes Produkt aus 2b) und 450 ml entionisiertes Wasser bei Raumtemperatur in einem 61-Glasreaktor vorgelegt. Die Suspension wird in 120 Minuten mit 2230 ml 5 gew.-%iger, wässriger Natronlauge versetzt. Anschließend wird weitere 15 Minuten gerührt. Danach wird das Produkt mit entionisiertem Wasser gewaschen. Man erhält 1340 ml Kationenaustauscher in der Na-Form.

| | |
|---|---|
| Totalkapazität (Na-Form) in mol/l | 2,23 |
| Leitfähigkeit im Eluat nach 70 h in µS/cm | 0,360 |
| Molekulargewicht der Polystyrolsulfonsäuren im Eluat in g/mol | 1100 |

### Beispiel 3 (erfindungsgemäß)

### a) Herstellung eines Copolymerisates

In einem 4 l Glasreaktor wird eine wässrige Lösung aus 3,6 g Borsäure und 1,0 g Natriumhydroxid in 1100 g entionisiertem Wasser vorgelegt. Hierzu werden 648,9 g monodisperses mikroverkapseltes Saatpolymerisat enthaltend 95 Gew.-% Styrol und 5,0 Gew.-% Divinylbenzol gegeben. Das Saatpolymerisat wurde nach EP-00 46535 B1 hergestellt. Die Kapselwand des Saatpolymerisats besteht aus einem mit Formaldehyd gehärteten Komplexkoazervat aus Gelatine und einem Acrylamid/Acrylsäure-Copolymerisat. Die mittlere Teilchengrösse des Saatpolymerisats beträgt 375 µm und der Ø(90)/Ø(10)-Wert 1,06. Das Gemisch wird mit einer Rührgeschwindigkeit von 220 Upm gerührt. Innerhalb von 30 min wird ein Gemisch aus 430,5 g Styrol, 48,0 g Acrylnitril, 73,0 g Divinylbenzol (80,6 gew.-%ig), 2,0 g tert-Butylperoxy-2-ethylhexanoat und 2,0 g tert-Butylperoxybenzoat als Feed zugesetzt. Das Gemisch wird 2 Stunden bei 50°C gerührt, wobei der Gasraum mit Stickstoff gespült wird. Danach wird eine Lösung von 2,4 g Methylhydroxyethylcellulose in 120 g entionisiertem Wasser zugesetzt und 1 Stunde bei 50°C gerührt. Der Ansatz wird auf 61°C aufgeheizt und 10 Stunden bei dieser Temperatur belassen, anschließend wird 3 Stunden bei 130°C gerührt. Der Ansatz wird nach dem Abkühlen über ein 40 µm-Sieb mit entionisiertem Wasser gewaschen und dann 18 Stunden bei 80°C im Trockenschrank getrocknet. Man erhält 1140 g eines kugelförmigen Copolymerisats mit einer Teilchengröße von 460 µm und einem Ø(90)/Ø(10)-Wert von 1,07.

### b) Herstellung eines Kationenaustauschers

In einem 2 l Vierhalskolben werden 1400 ml 98,1 gew.-%ige Schwefelsäure vorgelegt und auf 100°C erhitzt. In 4 Stunden werden in 10 Portionen - insgesamt 350 g trockenes Copolymerisat aus 3a) unter Rühren eingetragen. Anschließend wird weitere 6 Stunden bei 105°C gerührt. Nach dem Abkühlen wird die Suspension in eine Glassäule überführt. Schwefelsäuren abnehmender Konzentrationen, beginnend mit 90 Gew.-%, zuletzt reines Wasser werden von oben über die Säule filtriert. Man erhält 1480 ml Kationenaustauscher in der H-Form.

### c) Umladung eines Kationenaustauschers

Zur Umladung des Kationenaustauschers aus der H- in die Natriumform werden 1460 ml sulfoniertes Produkt aus 3b) und 450 ml Edelwasser bei Raumtemperatur in einem 61-Glasreaktor vorgelegt. Die Suspension wird in 120 Minuten mit 2383 ml 5 gew.-%iger, wässriger Natronlauge versetzt. Anschließend wird weitere 15 Minuten gerührt. Danach wird das Produkt mit entionisiertem Wasser gewaschen. Man erhält 1380 ml Kationenaustauscher in der Na-Form.

| | |
|---|---|
| Totalkapazität (Na-Form) in mol/l | 2,21 |
| Leitfähigkeit im Eluat nach 70 h in µS/cm | 0,136 |
| Molekulargewicht der Polystyrolsulfonsäuren im Eluat in g/mol | < 1000 |

### Beispiel 4 (erfindungsgemäß)

### a) Herstellung eines Copolymerisates

In einem 4 l Glasreaktor wird eine wässrige Lösung aus 3,6 g Borsäure und 1,0 g Natriumhydroxid in 1100 g entionisiertem Wasser vorgelegt. Hierzu werden 631,8 g monodisperses mikroverkapseltes Saatpolymerisat enthaltend 95 Gew.-% Styrol und 5,0 Gew.-% Divinylbenzol gegeben. Das Saatpolymerisat wurde nach EP-00 46535 B1 hergestellt. Die Kapselwand des Saatpolymerisats besteht aus einem mit Formaldehyd gehärteten Komplexkoazervat aus Gelatine und einem Acrylamid/Acrylsäure-Copolymerisat. Die mittlere Teilchengröße des Saatpolymerisats beträgt 365 µm und der Ø(90)/Ø(10)-Wert 1,05. Das Gemisch wird mit einer Rührgeschwindigkeit von 220 Upm gerührt. Innerhalb von 30 min wird ein Gemisch aus 463 g Styrol, 48,0 g Acrylnitril, 57,6 g Divinylbenzol (80,6 gew.-%ig), 2,1 g tert-Butylperoxy-2-ethylhexanoat und 1,4 g tert-Butylperoxybenzoat als Feed zugesetzt. Das Gemisch wird 2 Stunden bei 50°C gerührt, wobei der Gasraum mit Stickstoff gespült wird. Danach wird eine Lösung von 2,4 g Methylhydroxyethylcellulose in 120 g entionisiertem Wasser zugesetzt und 1 Stunde bei 50°C gerührt. Der Ansatz wird auf 61°C aufgeheizt und 10 Stunden bei dieser Temperatur belassen, anschließend wird 3 Stunden bei 130°C gerührt. Der Ansatz wird nach dem Abkühlen über ein 40 µm-Sieb mit entionisiertem Wasser gewaschen und dann 18 Stunden bei 80°C im Trockenschrank getrocknet. Man erhält 1121 g eines kugelförmigen Copolymerisats mit einer Teilchengröße von 450 µm und einem Ø(90)/Ø(10)-Wert von 1,05.

### b) Herstellung eines Kationenaustauschers

In einem 2 l Vierhalskolben werden 1400 ml 98,4 gew.-%ige Schwefelsäure vorgelegt und auf 100°C erhitzt . In 4 Stunden werden in 10 Portionen - insgesamt 350 g trockenes Copolymerisat aus 4a) unter Rühren eingetragen. Anschließend wird weitere 6 Stunden bei 120°C gerührt. Nach dem Abkühlen wird die Suspension in eine Glassäule überführt. Schwefelsäuren abnehmender Konzentrationen, beginnend mit 90 Gew.-%, zuletzt reines Wasser werden von oben über die Säule filtriert. Man erhält 1480 ml Kationenaustauscher in der H-Form.

### c) Umladung eines Kationenaustauschers

Zur Umladung des Kationenaustauschers aus der H- in die Natriumform werden 1460 ml sulfoniertes Produkt aus 4b) und 450 ml entionisiertem Wasser bei Raumtemperatur in einem 61-Glasreaktor vorgelegt. Die Suspension wird in 120 Minuten mit 2400 g 5 gew.-%iger, wässriger Natronlauge versetzt. Anschließend wird weitere 15 Minuten gerührt. Danach wird das Produkt mit entionisiertem Wasser gewaschen. Man erhält 1330 ml Kationenaustauscher in der Na-Form.

| | |
|---|---|
| Totalkapazität (Na-Form) in mol/l | 2,18 |
| Leitfähigkeit im Eluat nach 70 h in µS/cm | 0,540 |
| Molekulargewicht der Polystyrolsulfonsäuren im Eluat in g/mol | 2000 |

### Beispiel 5 (erfindungsgemäß)

### a) Herstellung eines Copolymerisates

In einem 4 l Glasreaktor wird eine wässrige Lösung aus 3,6 g Borsäure und 1,0 g Natriumhydroxid in 1100 g entionisiertem Wasser vorgelegt. Hierzu werden 600,2 g monodisperses mikroverkapseltes Saatpolymerisat enthaltend 95 Gew.-% Styrol und 5,0 Gew.-% Divinylbenzol gegeben. Das Saatpolymerisat wurde nach EP-00 46535 B1 hergestellt. Die Kapselwand des Saatpolymerisats besteht aus einem mit Formaldehyd gehärteten Komplexkoazervat aus Gelatine und einem Acrylamid/Acrylsäure-Copolymerisat. Die mittlere Teilchengrösse des Saatpolymerisats beträgt 365 µm und der Ø(90)/Ø(10)-Wert 1,05. Das Gemisch wird mit einer Rührgeschwindigkeit von 220 Upm gerührt. Innerhalb von 30 min wird ein Gemisch aus 504,6 g Styrol, 36,0 g Acrylnitril, 59,6 g Divinylbenzol (80,6 gew.-%ig), 2,2 g tert-Butylperoxy-2-ethylhexanoat und 1,5 g tert-Butylperoxybenzoat als Feed zugesetzt. Das Gemisch wird 2 Stunden bei 50°C gerührt, wobei der Gasraum mit Stickstoff gespült wird. Danach wird eine Lösung von 2,4 g Methylhydroxyethylcellulose in 120 g entionisiertem Wasser zugesetzt und 1 Stunde bei 50°C gerührt. Der Ansatz wird auf 61°C aufgeheizt und 10 Stunden bei dieser Temperatur belassen, anschließend wird 3 Stunden bei 130°C gerührt. Der Ansatz wird nach dem Abkühlen über ein 40 µm-Sieb mit entionisiertem Wasser gewaschen und dann 18 Stunden bei 80°C im Trockenschrank getrocknet. Man erhält 1176 g eines kugelförmigen Copolymerisats mit einer Teilchengröße von 460 µm und einem Ø(90)/Ø(10)-Wert von 1,06.

### b) Herstellung eines Kationenaustauschers

In einem 2 l Vierhalskolben werden 1400 ml 98,5 gew.-%ige Schwefelsäure vorgelegt und auf 100°C erhitzt. In 4 Stunden werden in 10 Portionen - insgesamt 350 g trockenes Copolymerisat aus 5a), unter Rühren eingetragen. Anschließend wird weitere 6 Stunden bei 105°C gerührt. Nach dem Abkühlen wird die Suspension in eine Glassäule überführt. Schwefelsäuren abnehmender Konzentrationen, beginnend mit 90 Gew.-%, zuletzt reines Wasser werden von oben über die Säule filtriert. Man erhält 1500 ml Kationenaustauscher in der H-Form.

### c) Umladung eines Kationenaustauschers

Zur Umladung des Kationenaustauschers aus der H- in die Natriumform werden 1480 ml sulfoniertes Produkt aus 5b) und 450 ml entionisiertes Wasser bei Raumtemperatur in einem 6 l-Glasreaktor vorgelegt. Die Suspension in 120 Minuten mit 2364 ml 5 gew.-%iger, wässriger Natronlauge versetzt. Anschließend wird weitere 15 Minuten gerührt. Danach wird das Produkt mit entionisiertem Wasser gewaschen. Man erhält 1380 ml Kationenaustauscher in der Na-Form.

| | |
|---|---|
| Totalkapazität (Na-Form) in mol/l | 2,19 |
| Leitfähigkeit im Eluat nach 70 h in µS/cm | 0,301 |
| Molekulargewicht der Polystyrolsulfonsäuren im Eluat in g/mol | 1500 |

### Beispiel 6 (erfindungsgemäß)

### a) Herstellung eines Copolymerisates

In einem 4 l Glasreaktor wird eine wässrige Lösung aus 3,6 g Borsäure und 1,0 g Natriumhydroxid in 1100 g entionisiertem Wasser vorgelegt. Hierzu werden 600,2 g monodisperses mikroverkapseltes Saatpolymerisat enthaltend 95 Gew.-% Styrol und 5,0 Gew.-% Divinylbenzol gegeben. Das Saatpolymerisat wurde nach EP-00 46535 B1 hergestellt. Die Kapselwand des Saatpolymerisats besteht aus einem mit Formaldehyd gehärteten Komplexkoazervat aus Gelatine und einem Acrylamid/Acrylsäure-Copolymerisat. Die mittlere Teilchengrösse des Saatpolymerisats beträgt 365 µm und der Ø(90)/Ø(10)-Wert 1,05. Das Gemisch wird mit einer Rührgeschwindigkeit von 220 Upm gerührt. Innerhalb von 30 min wird ein Gemisch aus 476,2 g Styrol, 48,0 g Acrylnitril, 76,0 g Divinylbenzol (80,6 gew.-%ig), 2,2 g tert-Butylperoxy-2-ethylhexanoat und 1,5 g tert-Butylperoxybenzoat als Feed zugesetzt. Das Gemisch wird 3 h bei 30°C gerührt, wobei der Gasraum mit Stickstoff gespült wird. Danach wird eine Lösung von 2,4 g Methylhydroxyethylcellulose in 120 g entionisiertem Wasser zugesetzt und 1 Stunde bei 30°C gerührt. Der Ansatz wird auf 61°C aufgeheizt und 8 Stunden bei dieser Temperatur belassen, anschließend wird 3 Stunden bei 130°C gerührt. Der Ansatz wird nach dem Abkühlen über ein 40 µm-Sieb mit entionisiertem Wasser gewaschen und dann 18 Stunden bei 80°C im Trockenschrank getrocknet. Man erhält 1133 g eines kugelförmigen Copolymerisats mit einer Teilchengröße von 460 µm und einem Ø(90)/Ø(10)-Wert von 1,07.

### b) Herstellung eines Kationenaustauschers

In einem 2 l Vierhalskolben werden 1400 ml 98,2 gew.-%ige Schwefelsäure vorgelegt und auf 100°C erhitzt. In 4 Stunden werden in 10 Portionen - insgesamt 350 g trockenes Copolymerisat aus 6a) unter Rühren eingetragen. Anschließend wird weitere 6 Stunden bei 105°C gerührt. Nach dem Abkühlen wird die Suspension in eine Glassäule überführt. Schwefelsäuren abnehmender Konzentrationen, beginnend mit 90 Gew.-%, zuletzt reines Wasser werden von oben über die Säule filtriert. Man erhält 1440 ml Kationenaustauscher in der H-Form.

### c) Umladung eines Kationenaustauschers

Zur Umladung des Kationenaustauschers aus der H- in die Natriumform werden 1420 ml sulfoniertes Produkt aus 6b) und 450 ml entionisiertem Wasser bei Raumtemperatur in einem 6 l-Glasreaktor vorgelegt. Die Suspension wird in 120 Minuten mit 2337 ml 5 gew.-%iger, wässriger Natronlauge versetzt. Anschließend wird weitere 15 Minuten gerührt. Danach wird das Produkt mit entionisiertem Wasser gewaschen. Man erhält 1340 ml Kationenaustauscher in der Na-Form.

| | |
|---|---|
| Totalkapazität (Na-Form) in mol/l | 2,24 |
| Leitfähigkeit im Eluat nach 70 h in µS/cm | 0,333 |
| Molekulargewicht der Polystyrolsulfonsäuren im Eluat in g/mol | 1000. |

### Beispiel 7 (erfindungsgemäß)

### a) Herstellung eines Copolymerisates

In einem 4 l Glasreaktor wird eine wässrige Lösung aus 3,6 g Borsäure und 1,0 g Natriumhydroxid in 1100 g entionisiertem Wasser vorgelegt. Hierzu werden 600,2 g monodisperses mikroverkapseltes Saatpolymerisat enthaltend 95 Gew.-% Styrol und 5,0 Gew.-% Divinylbenzol gegeben. Das Saatpolymerisat wurde nach EP-00 46535 B1 hergestellt. Die Kapselwand des Saatpolymerisats besteht aus einem mit Formaldehyd gehärteten Komplexkoazervat aus Gelatine und einem Acrylamid/Acrylsäure-Copolymerisat. Die mittlere Teilchengrösse des Saatpolymerisats beträgt 365 µm und der Ø(90)/Ø(10)-Wert 1,05. Das Gemisch wird mit einer Rührgeschwindigkeit von 220 Upm gerührt. Innerhalb von 30 min wird ein Gemisch aus 485,2 g Styrol, 48,0 g Acrylnitril, 67,0 g Divinylbenzol (80,6 gew.-%ig), 2,2 g tert-Butylperoxy-2-ethylhexanoat und 1,5 g tert-Butylperoxybenzoat als Feed zugesetzt. Das Gemisch wird 2 Stunden bei 50°C gerührt, wobei der Gasraum mit Stickstoff gespült wird. Danach wird eine Lösung von 2,4 g Methylhydroxyethylcellulose in 120 g entionisiertem Wasser zugesetzt und 1 Stunde bei 50°C gerührt. Der Ansatz wird auf 63°C aufgeheizt und 10 Stunden bei dieser Temperatur belassen, anschließend wird 3 Stunden bei 130°C gerührt. Der Ansatz wird nach dem Abkühlen über ein 40 µm-Sieb mit entionisiertem Wasser gewaschen und dann 18 Stunden bei 80°C im Trockenschrank getrocknet. Man erhält 1169 g eines kugelförmigen Copolymerisats mit einer Teilchengröße von 460 µm und einem Ø(90)/Ø(10)-Wert von 1,08.

### b) Herstellung eines Kationenaustauschers

In einem 2 l Vierhalskolben werden 1400 ml 98,1 gew.-%ige Schwefelsäure vorgelegt und auf 100°C erhitzt. In 4 Stunden werden in 10 Portionen - insgesamt 350 g Copolymerisat aus 7a) unter Rühren eingetragen. Anschließend wird weitere 6 Stunden bei 120°C gerührt. Nach dem Abkühlen wird die Suspension in eine Glassäule überführt. Schwefelsäuren abnehmender Konzentrationen, beginnend mit 90 Gew.-%, zuletzt reines Wasser werden von oben über die Säule filtriert. Man erhält 1480 ml Kationenaustauscher in der H-Form.

### c) Umladung eines Kationenaustauschers

Zur Umladung des Kationenaustauschers aus der H- in die Natriumform werden 1460 ml sulfoniertes Produkt aus 7b) und 450 ml entionisiertem Wasser bei Raumtemperatur in einem 61-Glasreaktor vorgelegt. Die Suspension wird in 120 Minuten mit 2361 ml 5 gew.-%iger, wässriger Natronlauge versetzt. Anschließend wird weitere 15 Minuten gerührt. Danach wird das Produkt mit entionisiertem Wasser gewaschen. Man erhält 1350 ml Kationenaustauscher in der Na-Form.

| | |
|---|---|
| Totalkapazität (Na-Form) in mol/l | 2,17 |
| Leitfähigkeit im Eluat nach 70 h in µS/cm | 0,457 |
| Molekulargewicht der Polystyrolsulfonsäuren im Eluat in g/mol | 2500 |

### Beispiel 8 (erfindungsgemäß)

### a) Herstellung eines Copolymerisates

In einem 4 l Glasreaktor wird eine wässrige Lösung aus 3,6 g Borsäure, 1,0 g Natriumhydroxid und 0,10 g Resorcin in 1100 g entionisiertem Wasser vorgelegt. Hierzu werden 648,9 g monodisperses mikroverkapseltes Saatpolymerisat enthaltend 95 Gew.-% Styrol und 5,0 Gew.-% Divinylbenzol gegeben. Das Saatpolymerisat wurde nach EP-00 46535 B1 hergestellt. Die Kapselwand des Saatpolymerisats besteht aus einem mit Formaldehyd gehärteten Komplexkoazervat aus Gelatine und einem Acrylamid/Acrylsäure-Copolymerisat. Die mittlere Teilchengrösse des Saatpolymerisats beträgt 375 µm und der Ø(90)/Ø(10)-Wert 1,06. Das Gemisch wird mit einer Rührgeschwindigkeit von 220 Upm gerührt. Innerhalb von 30 min wird ein Gemisch aus 430,5 g Styrol, 48,0 g Acrylnitril, 73,0 g Divinylbenzol (80,6 gew.-%ig), 2,0 g tert-Butylperoxy-2-ethylhexanoat und 1,4 g tert-Butylperoxybenzoat als Feed zugesetzt. Das Gemisch wird 2 Stunden bei 50°C gerührt, wobei der Gasraum mit Stickstoff gespült wird. Danach wird eine Lösung von 2,4 g Methylhydroxyethylcellulose in 120 g entionisiertem Wasser zugesetzt und 1 Stunde bei 50°C gerührt. Der Ansatz wird auf 61°C aufgeheizt und 10 Stunden bei dieser Temperatur belassen, anschließend wird 3 Stunden bei 130°C gerührt. Der Ansatz wird nach dem Abkühlen gründlich über ein 40 µm-Sieb mit entionisiertem Wasser gewaschen und dann 18 Stunden bei 80°C im Trockenschrank getrocknet. Man erhält 1144 g eines kugelförmigen Copolymerisats mit einer Teilchengröße von 460 µm und einem Ø(90)/Ø(10)-Wert von 1,07.

### b) Herstellung eines Kationenaustauschers

In einem 2 l Vierhalskolben werden 1400 ml 98,5 gew.-%ige Schwefelsäure vorgelegt und auf 100°C erhitzt. In 4 Stunden werden in 10 Portionen - insgesamt 350 g trockenes Copolymerisat aus 8a) unter Rühren eingetragen. Anschließend wird weitere 6 Stunden bei 105°C gerührt. Nach dem Abkühlen wird die Suspension in eine Glassäule überführt. Schwefelsäuren abnehmender Konzentrationen, beginnend mit 90 Gew.-%, zuletzt reines Wasser werden von oben über die Säule filtriert. Man erhält 1430 ml Kationenaustauscher in der H-Form.

### c) Umladung eines Kationenaustauschers

Zur Umladung des Kationenaustauschers aus der H- in die Natriumform werden 1410 ml sulfoniertes Produkt aus 8b) und 450 ml entionisiertem Wasser bei Raumtemperatur in einem 4l-Glasreaktor vorgelegt. Die Suspension wird in 120 Minuten mit 1752 ml 5 gew.-%iger, wässriger Natronlauge versetzt. Anschließend wird weitere 15 Minuten gerührt. Danach wird das Produkt mit entionisiertem Wasser gewaschen. Man erhält 1325 ml Kationenaustauscher in der Na-Form.

| | |
|---|---|
| Totalkapazität (Na-Form) in mol/l | 2,22 |
| Leitfähigkeit im Eluat nach 70 h in µS/cm | 0,092 |
| Molekulargewicht der Polystyrolsulfonsäuren im Eluat in g/mol | <1000 |

Überraschenderweise zeigen die erfindungsgemäß hergestellten Kationenaustauscher nach 70 Stunden eine deutlich niedrigere Leitfähigkeit im Eluat, als Kationenaustauscher hergestellt nach EP-A 10 00 659.

## Patentansprüche

1. Verfahren zur Herstellung von gelförmigen Kationenaustauschern mit verbesserter Oxidationsstabilität nach einem Saat-Zulauf-Verfahren **dadurch gekennzeichnet, dass** man
a) in einer wässrigen Suspension ein perlförmiges vernetztes Styrolpolymerisates enthaltend 3,5 - 7 Gew.-% Vernetzer als Saatpolymerisat bereitstellt,
b) das Saatpolymerisat in einem Monomergemisch aus Vinylmonomer, Vemetzer und Radikalstarter quellen lässt,
c) das Monomergemisch im Saatpolymerisat polymerisiert und,
d) das entstandene Copolymerisat durch Sulfonierung funktionalisiert.

2. Verfahren nach Anspruch 1, **dadurch gekennzeichnet, dass** das perlförmige vernetzte Styrolpolymerisat im Verfahrensschritt a) eine Teilchengrössenverteilung besitzt, bei der der Quotient aus dem 90 %-Wert und dem 10 %-Wert der Volumenverteilungsfunktion weniger als 2 beträgt.

3. Verfahren nach Anspruch 1, **dadurch gekennzeichnet, dass** das Saatpolymerisat mikroverkapselt ist.

4. Verfahren nach Anspruch 1, **dadurch gekennzeichnet, dass** der Gehalt an Vernetzer im Monomergemisch aus Verfahrensschritt b) 5 bis 20 Gew.-% beträgt.

5. Verfahren nach Anspruch 1, **dadurch gekennzeichnet, dass** das Vinylmonomer aus Verfahrensschritt b) ein Gemisch aus
88 - 98 Gew.-% Styrol und
2 - 14 Gew.-% Acrylmonomer
ist.

6. Verfahren nach Anspruch 5, **dadurch gekennzeichnet, dass** das Acrylmonomer Acrylnitril ist.

7. Verfahren nach Anspruch 1, **dadurch gekennzeichnet, dass** der Radikalstarter ein aliphatischer Perester ist.

8. Verfahren nach Anspruch 1, **dadurch gekennzeichnet, dass** die Polymerisation im Verfahrensschritt c) in einem breitem Temperaturbereich von 50 - 150°C stattfindet.

9. Verfahren nach Anspruch 1, **dadurch gekennzeichnet, dass** das Monomergemisch im Verfahrensschritt b) ein Gemisch mindestens zweier verschiedener Radikalstarter enthält.

10. Gelförmige Kationenaustauscher erhältlich nach einem Saat-Zulauf-Verfahren durch
a) Bereitstellung einer wässrigen Suspension eines perlförmigen 3,5 - 7 Gew.-% Vernetzer enthaltenden vernetzten Styrolpolymerisates als Saatpolymerisat,
b) Quellen des Saatpolymerisates in einem Monomergemisch aus Vinylmonomer, Vernetzer und Radikalstarter,
c) Polymerisieren des Monomergemisches im Saatpolymerisat und
d) Funktionalisieren des gebildeten Copolymerisates durch Sulfonierung.

11. Verwendung der gelförmigen Kationenaustauscher gemäß Anspruch 10
zur Entfernung von Kationen, Farbpartikeln oder organischen Komponenten aus wässrigen oder organischen Lösungen und Kondensaten, zur Enthärtung im Neutralaustausch von wässrigen oder organischen Lösungen und Kondensaten, zur Reinigung und Aufarbeitung von Wässern der chemischen Industrie, der Elektronik-Industrie und aus Kraftwerken, zur Vollentsalzung wässriger Lösungen und/oder Kondensate, **dadurch gekennzeichnet, dass** man diese in Kombination mit gelförmigen und/oder makroporösen Anionenaustauschern einsetzt, zur Entfärbung und Entsalzung von Molken, Gelatinedünnbrühen, Fruchtsäften, Fruchtmosten und wässrigen Lösungen von Zuckern, zu feingemahlener Pulverform allein oder gegebenenfalls in Mischung mit starkbasischen Anionenaustauschern zur Filtration oder Entsalzung von Wässern, beispielsweise Kondensaten oder in der Hydrometallurgie.
